# EUROPEAN PATENT APPLICATION

(11) **EP 4 597 203 A1**
(43) Date of publication of application: **06.08.2025**
(21) Application number: 23889080.0
(22) Date of filing: 06.11.2023
(51) Int. Cl.: G02B 27/01, G06F 3/01, G02C 5/00

(54) **WEARABLE ELECTRONIC DEVICE COMPRISING PLURALITY OF HINGE STRUCTURES**

(30) Priority: 09.11.2022 KR 20220148490; 29.12.2022 KR 20220189655
(71) Applicant: Samsung Electronics Co., Ltd., Suwon-si, Gyeonggi-do 16677 (KR)
(72) Inventor: YOON, Geonho, Suwon-si Gyeonggi-do 16677 (KR); KIM, Gyeongbeom, Suwon-si Gyeonggi-do 16677 (KR); KIM, Chulkwi, Suwon-si Gyeonggi-do 16677 (KR); PARK, Jonggyu, Suwon-si Gyeonggi-do 16677 (KR); YANG, Sungkwang, Suwon-si Gyeonggi-do 16677 (KR); YANG, Hyunmo, Suwon-si Gyeonggi-do 16677 (KR); UHM, Junwhon, Suwon-si Gyeonggi-do 16677 (KR); YOON, Jongmin, Suwon-si Gyeonggi-do 16677 (KR); LIM, Gisoo, Suwon-si Gyeonggi-do 16677 (KR)
(74) Representative: HGF
(86) International application number: PCT/KR2023/017668
(87) International publication number: WO 2024/101819

(57) **Abstract**

A wearable electronic device according to an embodiment of the present disclosure comprises: a lens frame receiving a display member; and a temple having a first portion connected to the lens frame, a second portion extending from the first portion, and a third portion extending from the second portion, and comprising a plurality of hinges. The plurality of hinges according to an embodiment of the present disclosure may comprise: a first hinge which is located between the lens frame and the first portion of the temple and connects the first portion of the temple to be rotatable with respect to the lens frame in a first direction; a second hinge which is located between the first portion and the second portion of the temple and connects the second portion to be rotatable with respect to the first portion in the first direction or a second direction opposite to the first direction; and a third hinge which is located between the second portion and the third portion of the temple and connects the third portion to be rotatable with respect to the second portion in the first direction or in the second direction.

## Description

### [Technical Field]

An embodiment of the present invention relates to a wearable electronic device including a plurality of hinge structures.

### [Background Art]

Electronic device means a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated and high-speed, high-volume wireless communication becomes commonplace, mobile communication terminals are recently being equipped with various functions. For example, an electronic device comes with the integrated functionality, including an entertainment function, such as playing video games, a multimedia function, such as replaying music/videos, a communication and security function for mobile banking, and a scheduling or e-wallet function.

Portable electronic devices, such as electronic schedulers, portable multimedia players, mobile communication terminals, tablet personal computers (PCs), etc., are generally equipped with a flat-type display device and a battery, and may be limited in shape to a bar, clamshell, or slidable shape by their accompanying displays or batteries. As display devices and batteries are nowadays made smaller and have enhanced performance, wearable electronic device which may be put on the user's wrist, head, or other body portions are commercially available. Wearable electronic devices may be directly worn on the human body, presenting better portability and user accessibility.

### [Detailed Description of the Invention]

### [Technical Solution]

A wearable electronic device according to an embodiment of the disclosure may comprise a lens frame configured to receive a display member, and a temple including a first portion connected to the lens frame, a second portion extending from the first portion, a third portion extending from the second portion, and a plurality of hinges.

The plurality of hinges according to an embodiment of the disclosure may include a first hinge positioned between the lens frame and the first portion of the temple and having at least a portion configured to be rotatable in an outward direction when a user wears the wearable electronic device; a second hinge positioned between the first portion and the second portion of the temple and having at least a portion configured to be rotatable in the outward direction or an inward direction when the user wears the wearable electronic device, and a third hinge positioned between the second portion and the third portion of the temple and having at least a portion configured to be rotatable in the outward direction or the inward direction when the user wears the wearable electronic device.

A wearable electronic device according to an embodiment of the disclosure may comprise a lens frame configured to receive a display member, and a temple including a first portion connected to the lens frame, a second portion extending from the first portion, a third portion extending from the second portion, and a plurality of leaf springs.

The plurality of leaf springs according to an embodiment of the disclosure may include a first leaf spring positioned between the lens frame and the first portion of the temple and having at least a portion configured to be rotatable in an outward direction when a user wears the wearable electronic device, a second leaf spring positioned between the first portion and the second portion of the temple and having at least a portion configured to be rotatable in the outward direction or an inward direction when the user wears the wearable electronic device, and a third leaf spring positioned between the second portion and the third portion of the temple and having at least a portion configured to be rotatable in the outward direction or the inward direction when the user wears the wearable electronic device.

### [Brief Description of Drawings]

FIG. 1 is a block diagram illustrating an electronic device in a network environment according to an embodiment of the disclosure;
FIG. 2 is a perspective view illustrating a wearable electronic device according to an embodiment of the disclosure;
FIG. 3 is an assembled perspective view illustrating an internal configuration of a wearable electronic device according to an embodiment of the disclosure;
FIG. 4 is an exploded perspective view illustrating a wearable electronic device according to an embodiment of the disclosure;
FIG. 5 is a view illustrating a wearable electronic device according to an embodiment of the disclosure;
FIG. 6 is a view illustrating a state in which a user wears a wearable electronic device according to an embodiment of the disclosure;
FIG. 7 is a view illustrating a folded state of a wearable electronic device according to an embodiment of the disclosure;
FIG. 8 is a view illustrating an unfolded state of a wearable electronic device according to an embodiment of the disclosure;
FIG. 9 is a view illustrating an intermediate state of a wearable electronic device according to an embodiment of the disclosure;
FIG. 10 is a view illustrating a folded state of a wearable electronic device including a plurality of leaf springs according to an embodiment of the disclosure;
FIG. 11 is a view illustrating a state in which a wearable electronic device including a plurality of leaf springs is worn according to an embodiment of the disclosure; and
FIG. 12 is a view illustrating a first leaf spring according to an embodiment of the disclosure.

### [Mode for Carrying out the Invention]

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

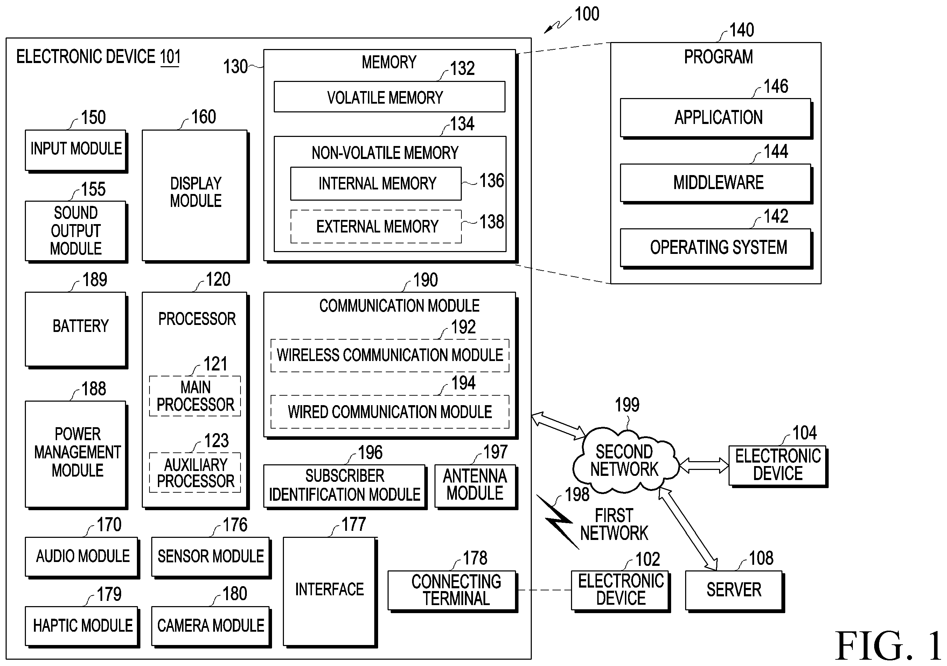

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

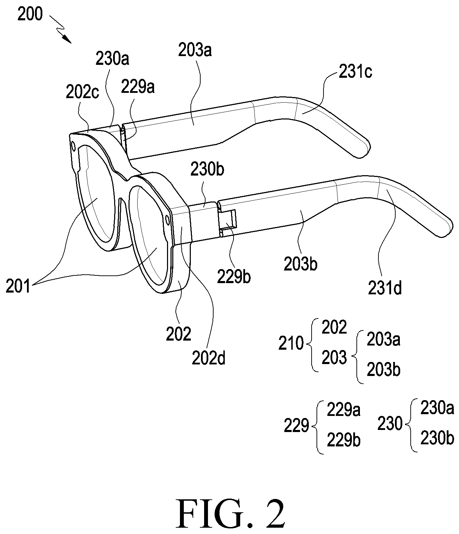

FIG. 2 is an exploded perspective view illustrating a wearable electronic device 200 according to an embodiment of the disclosure.

Referring to FIG. 2, the wearable electronic device 200 may be a glasses-type electronic device (e.g., the electronic device 101 of FIG. 1), and the user may visually recognize the surrounding objects or environment while wearing the wearable electronic device 200. For example, the wearable electronic device 200 may include a head-mounted device (HMD) or smart glasses capable of providing images directly in front of the user's eyes. The configuration of the wearable electronic device 200 of FIG. 2 may be identical in whole or part to the configuration of the electronic device 101 of FIG. 1.

According to an embodiment, the wearable electronic device 200 may include a housing that forms the exterior of the wearable electronic device 200. The housing 210 may provide a space in which components of the wearable electronic device 200 may be disposed. For example, the housing 210 may include a lens frame 202 and at least one wearing member 203.

According to an embodiment, the wearable electronic device 200 may include at least one display member 201 disposed in the housing 210 and capable of outputting a visual image. For example, the wearable electronic device 200 may include at least one display member 201 capable of providing the user with visual information (or images). For example, the display member 201 may include a module equipped with a lens, a display, a waveguide, and/or a touch circuit. According to an embodiment, the display member 201 may be transparent or semi-transparent. According to an embodiment, the display member 201 may include a semi-transparent glass or a window member the light transmittance of which may be adjusted as the coloring concentration is adjusted.

According to an embodiment, the lens frame 202 may receive at least a portion of the display member 201. For example, the lens frame 202 may surround at least a portion of the display member 201. According to an embodiment, the lens frame 202 may position at least one of the display members 201 to correspond to the user's eye. According to an embodiment, the lens frame 202 may be the rim of a normal eyeglass structure. According to an embodiment, the lens frame 202 may include at least one closed loop surrounding the display devices 201. According to an embodiment, the lens frame 202 may include a first end 202c and a second end 202d opposite to the first end 202c. The first end 202c may be disposed adjacent to the first wearing member 203a, and the second end 202d may be disposed adjacent to the second wearing member 203b.

According to an embodiment, the wearing members 203 may extend from the lens frame 202. For example, the wearing members 203 may extend from ends of the lens frame 202 and, together with the lens frame 202, may be supported and/or positioned on a part (e.g., ears) of the user's body. According to an embodiment, the wearing members 203 may be rotatably coupled to the lens frame 202 through hinge structures 229. According to an embodiment, the wearing member 203 may include an inner side surface 231c configured to face the user's body and an outer side surface 231d opposite to the inner side surface 231c. According to an embodiment (not shown), at least a portion of the wearing member 203 may be formed of a flexible material (e.g., rubber). For example, at least a portion of the wearing member 203 may be formed in a band shape surrounding at least a portion of the user's body (e.g., ears).

According to an embodiment, the wearable electronic device 200 may include the hinge structures 229 configured to fold the wearing members 203 on the lens frame 202. The hinge structure 229 may be disposed between the lens frame 202 and the wearing member 203. While the user does not wear the wearable electronic device 200, the user may fold the wearing members 203 on the lens frame 202 to carry or store the electronic device. According to an embodiment, the hinge structure 229 may include a first hinge structure 229a connected to a portion (e.g., the first end 202c) of the lens frame 202 and the first wearing member 203a and a second hinge structure 229b connected to a portion (e.g., the second end 202d) of the lens frame 202 and the second wearing member 203b.

According to an embodiment, the first hinge structure 229a and the second hinge structure 229b may be positioned to be spaced apart from the display member 201 by a predetermined distance in the Y-axis direction. A hinge connection structure 230 may include a first hinge connection structure 230a and a second hinge connection structure 230b. The first hinge structure 229a may be fixed to the lens frame 202 by the first hinge connection structure 230a, and the second hinge structure 229b may be fixed to the lens frame 202 by the second hinge connection structure 230b.

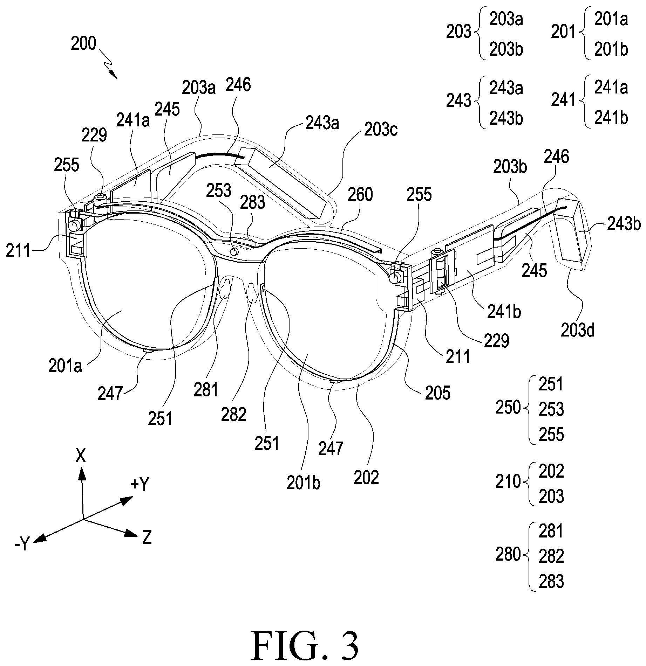

FIG. 3 is an assembled perspective view illustrating an internal configuration of a wearable electronic device 200 according to an embodiment of the disclosure.

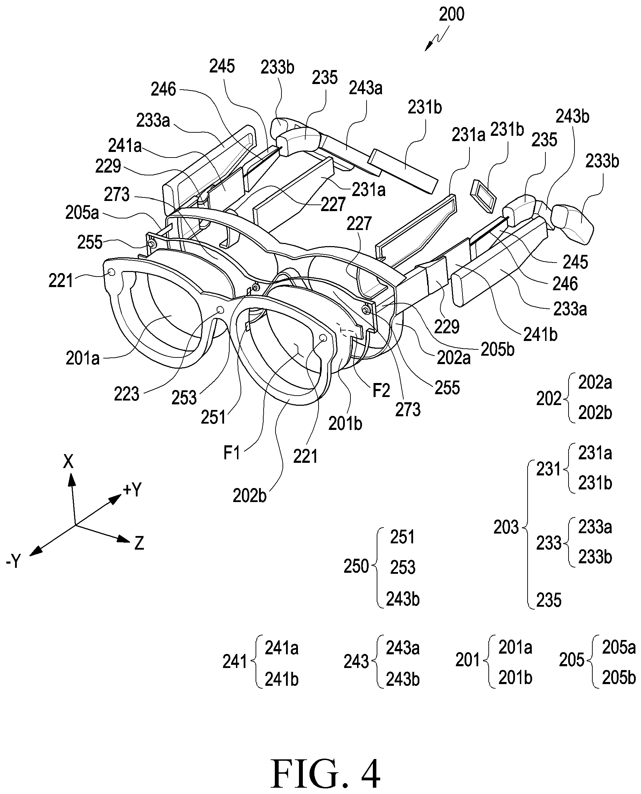

FIG. 4 is an exploded perspective view illustrating a wearable electronic device 200 according to an embodiment of the disclosure.

The configuration of the display member 201, the lens frame 202, the wearing member 203, and the hinge structure 229 of FIGS. 3 and/or 4 may be identical in whole or part to the configuration of the display member 201, the lens frame 202, the wearing member 203, and the hinge structure 229 of FIG. 2.

Referring to FIGS. 3 and 4, the wearable electronic device 200 may include a display member 201, a lens frame 202, a wearing member 203, a hinge structure 229, at least one circuit board 241, at least one battery 243, at least one power transfer structure 246, a camera module 250, and/or a sensor module 280.

According to an embodiment, the wearable electronic device 200 may obtain and/or recognize a visual image regarding an object or environment in the direction (e.g., -Y direction) in which the electronic device 200 faces or the direction in which the user gazes, using the camera module 250 (e.g., the camera module 180 of FIG. 1) and may receive information regarding the object or environment from an external electronic device (e.g., the electronic device 102 or 104 of FIG. 1 or the server 108 of FIG. 1) through a network (e.g., the first network 198 or second network 199 of FIG. 1). In another embodiment, the wearable electronic device 200 may provide the received object- or environment-related information, in the form of an audio or visual form, to the user. The wearable electronic device 200 may provide the received object- or environment-related information, in a visual form, to the user through the display members 201, using the display module (e.g., the display module 160 of FIG. 1). For example, the wearable electronic device 200 may implement augmented reality (AR) by implementing the object- or environment-related information in a visual form and combining it with an actual image of the user's surrounding environment.

According to an embodiment, a pair of display members 201 may be provided and disposed to correspond to the user's left and right eyes, respectively, with the wearable electronic device 200 worn on the user's body. For example, the display member 201 may include a first display member 201a and a second display member 201b disposed to be spaced apart from the first display member 201a. The first display member 201a may be disposed to correspond to the user's right eye, and the second display member 201b may be disposed to correspond to the user's left eye.

According to an embodiment, the display member 201 may include a first surface F1 facing in a direction (e.g., -y direction) in which external light is incident and a second surface F2 facing in a direction (e.g., +y direction) opposite to the first surface F1. With the user wearing the wearable electronic device 200, at least a portion of the light or image coming through the first surface F1 may be incident on the user's left eye and/or right eye through the second surface F2 of the display member 201 disposed to face the user's left eye and/or right eye.

According to an embodiment, the lens frame 202 may include at least two or more frames. For example, the lens frame 202 may include a first frame 202a and a second frame 202b. According to an embodiment, when the user wears the wearable electronic device 200, the first frame 202a may be a frame of the portion facing the user's face, and the second frame 202b may be a portion of the lens frame 202 spaced from the first frame 202a in the gazing direction (e.g., - Y direction) in which the user gazes.

According to an embodiment, the electronic device 200 may include a light output module 211 configured to provide an image and/or video to the user. For example, the light output module 211 may include a display panel (not shown) capable of outputting images and a lens (not shown) corresponding to the user's eye and guiding images to the display member 201. For example, the user may obtain the image output from the display panel of the light output module 211 through the lens of the light output module 211. According to various embodiments, the light output module 211 may include a device configured to display various information. For example, the light output module 211 may include at least one of a liquid crystal display (LCD), a digital mirror device (DMD), a liquid crystal on silicon (LCoS), or an organic light emitting diode (OLED), or a micro light emitting diode (micro LED). According to an embodiment, when the light output module 211 and/or the display member 201 includes one of a liquid crystal display device, a digital mirror display device, or a silicon liquid crystal display device, the wearable electronic device 200 may include a light output module 211 and/or a light source emitting light to the display area of the display member 201. According to another embodiment, when the light output module 211 and/or the display member 201 includes organic light emitting diodes or micro LEDs, the wearable electronic device 200 may provide virtual images to the user without a separate light source.

According to an embodiment, at least a portion of the light output module 211 may be disposed in the housing 210. For example, the light output module 211 may be connected to the display member 201 and may provide images to the user through the display member 201. For example, the image output from the light output module 211 may be incident on the display member 201 through an input optical member (not shown) positioned at an end of the display member 201 and be radiated to the user's eyes through a waveguide (not shown) and an output optical member (not shown) positioned in at least a portion of the display member 201.

According to an embodiment, the wearable electronic device 200 may include a circuit board 241 (e.g., a printed circuit board (PCB), a printed board assembly (PBA), a flexible PCB (FPCB), or a rigid-flexible PCB (RFPCB)) receiving components for driving the wearable electronic device 200. For example, the circuit board 241 may include at least one integrated circuit chip, and at least one of a processor (not shown) (e.g., the processor 120 of FIG. 1), memory (not shown) (e.g., the memory 130 of FIG. 1), a power management module (not shown) (e.g., the power management module 188 of FIG. 1), or a communication module (e.g., the communication module 190 of FIG. 1) may be provided in the integrated circuit chip. According to an embodiment, a circuit board 241 may be disposed in the wearing member 203 of the housing 210. For example, the circuit board 241 may include a first circuit board 241a disposed in the first wearing member 203a and a second circuit board 241b disposed in the second wearing member 203b. According to an embodiment, the communication module (e.g., the communication module 190 of FIG. 1) may be disposed on the first circuit board 241a positioned in the first wearing member 203a, and the processor (e.g., the processor 120 of FIG. 1) may be disposed on the second circuit board 241b positioned in the second wearing member 203b. According to an embodiment, the circuit board 241 may be electrically connected to the battery 243 (e.g., the battery 189 of FIG. 1) through the power transfer structure 246. According to an embodiment, the circuit board 241 may be an interposer board.

According to an embodiment, the battery 243 may be connected with components (e.g., the light output module 211, the circuit board 241, and the speaker module 245, the microphone module 247, and/or the camera module 250) of the wearable electronic device 200 and may supply power to the components of the wearable electronic device 200.

According to an embodiment, at least a portion of the battery 243 may be disposed in the wearing member 203. According to an embodiment, the battery 243 may include a first battery 243a disposed in the first wearing member 203a and a second battery 243b disposed in the second wearing member 203b. According to an embodiment, batteries 243 may be disposed adjacent to ends 203c and 203d of the wearing members 203.

According to an embodiment, the speaker module 245 (e.g., the audio module 170 or the sound output module 155 of FIG. 1) may convert an electrical signal into sound. At least a portion of the speaker module 245 may be disposed in the wearing member 203 of the housing 210. According to an embodiment, the speaker module 245 may be located in the wearing member 203 to correspond to the user's ear. According to an embodiment (e.g., FIG. 3), the speaker module 245 may be disposed next to the circuit board 241. For example, the speaker module 245 may be disposed between the circuit board 241 and the battery 243. According to another embodiment (not shown), the speaker module 245 may be disposed on the circuit board 241. For example, the speaker module 245 may be disposed between the circuit board 241 and the inner case (e.g., the inner case 231 of FIG. 4).

According to an embodiment, the wearable electronic device 200 may include a power transfer structure 246 configured to transfer power from the battery 243 to an electronic component (e.g., the light output module 211) of the wearable electronic device 200. For example, the power transfer structure 246 may be electrically connected to the battery 243 and/or the circuit board 241, and the circuit board 241 may transfer the received power to the light output module 211 through the power transfer structure 246. According to an embodiment, the power transfer structure 246 may be a component capable of transferring power. For example, the power transfer structure 246 may include a flexible printed circuit board or wiring. For example, the wiring may include a plurality of cables (not shown). In various embodiments, various changes may be made to the shape of the power transfer structure 246 considering the number and/or type of the cables.

According to an embodiment, the microphone module 247 (e.g., the input module 150 and/or the audio module 170 of FIG. 1) may convert a sound into an electrical signal. According to an embodiment, the microphone module 247 may be disposed in the lens frame 202. For example, at least one microphone module 247 may be disposed on a lower end (e.g., in the -X-axis direction) and/or on an upper end (e.g., in the +X-axis direction) of the wearable electronic device 200. According to an embodiment, the wearable electronic device 200 may more clearly recognize the user's voice using voice information (e.g., sound) obtained by the at least one microphone module 247. For example, the electronic device 200 may distinguish the voice information from the ambient noise based on the obtained voice information and/or additional information (e.g., low-frequency vibration of the user's skin and bones). For example, the wearable electronic device 200 may clearly recognize the user's voice and may perform a function of reducing ambient noise (e.g., noise canceling).

According to an embodiment, the camera module 250 may capture a still image and/or a video. The camera module 250 may include at least one of a lens, at least one image sensor, an image signal processor, or a flash. According to an embodiment, the camera module 250 may be disposed in the lens frame 202 and may be disposed around the display member 201.

According to an embodiment, the camera module 250 may include at least one first camera module 251. According to an embodiment, the first camera module 251 may capture the trajectory of the user's eye (e.g., a pupil) or gaze. For example, the first camera module 251 may include a light emitting unit (e.g., an IR LED) (not shown) configured to emit light in an infrared band and a camera structure (not shown) configured to capture the reflection pattern of the light emitted by the light emitting unit to the user's eyes. According to an embodiment, the processor (e.g., the processor 120 of FIG. 1) may adjust the position of the virtual image so that the virtual image projected on the display member 201 corresponds to the direction in which the user's pupil gazes. According to an embodiment, it is possible to track the trajectory of the user's eyes or gaze using a plurality of first camera modules 251 having the same specifications and performance.

According to an embodiment, the camera modules 250 may include at least one second camera module 253. According to an embodiment, the second camera module 253 may capture an external image. According to an embodiment, the second camera module 253 may capture an external image through the second optical hole 223 formed in the second frame 202b. For example, the second camera module 253 may include a high-resolution color camera, and it may be a high resolution (HR) or photo video (PV) camera. According to an embodiment, the second camera module 253 may provide an auto-focus (AF) function and an optical image stabilizer (OIS) function.

According to an embodiment (not shown), the wearable electronic device 200 may include a flash (not shown) positioned adjacent to the second camera module 253. For example, the flash (not shown) may provide light for increasing brightness (e.g., illuminance) around the wearable electronic device 200 when an external image is obtained by the second camera module 253, thereby reducing difficulty in obtaining an image due to the dark environment, the mixing of various light beams, and/or the reflection of light.

According to an embodiment, the camera modules 250 may include at least one third camera module 255. According to an embodiment, the third camera module 255 may capture the user's motion through a first optical hole 221 formed in the lens frame 202. For example, the third camera module 255 may capture the user's gesture (e.g., hand gesture). Third camera modules 255 and/or first optical holes 221 may be disposed on two opposite sides of the lens frame 202 (e.g., the second frame 202b), e.g., formed in two opposite ends of the lens frame 202 (e.g., the second frame 202b) with respect to the Z direction. According to an embodiment, the third camera module 255 may include a global shutter (GS)-type camera. For example, the third camera module 255 may be a camera supporting 3DoF (degrees of freedom) or 6DoF, which may provide position recognition and/or motion recognition in a 360-degree space (e.g., omni-directionally). According to an embodiment, the third camera modules 255 may be stereo cameras and may perform the functions of simultaneous localization and mapping (SLAM) and user motion recognition using a plurality of global shutter-type cameras with the same specifications and performance. According to an embodiment, the third camera module 255 may include an infrared (IR) camera (e.g., a time of flight (TOF) camera or a structured light camera). For example, the IR camera may be operated as at least a portion of a sensor module (e.g., the sensor module 176 of FIG. 1) for detecting a distance from the subject.

According to an embodiment, at least one of the first camera module 251 or the third camera module 255 may be replaced with a sensor module (e.g., the sensor module 176 of FIG. 1). For example, the sensor module may include at least one of a vertical cavity surface emitting laser (VCSEL), an infrared sensor, and/or a photodiode. For example, the photodiode may include a positive intrinsic negative (PIN) photodiode or an avalanche photodiode (APD). The photodiode may be interpreted as a photo detector or a photo sensor.

According to an embodiment, at least one of the first camera module 251, the second camera module 253, and the third camera module 255 may include a plurality of camera modules (not shown). For example, the second camera module 253 may include a plurality of lenses (e.g., wide-angle and telephoto lenses) and image sensors and may be disposed on one surface (e.g., a surface facing in the -Y axis) of the electronic device 200. For example, the wearable electronic device 200 may include a plurality of camera modules having different properties (e.g., angle of view) or functions and control to change the angle of view of the camera module based on the user's selection and/or trajectory information. At least one of the plurality of camera modules may be a wide-angle camera and at least another of the plurality of camera modules may form a telephoto camera.

According to an embodiment, the processor (e.g., processor 120 of FIG. 1) may determine the motion of the wearable electronic device 200 and/or the user's motion using information for the wearable electronic device 200 obtained using at least one of a gesture sensor, a gyro sensor, or an acceleration sensor of the sensor module (e.g., the sensor module 176 of FIG. 1) and the user's action (e.g., approach of the user's body to the wearable electronic device 200) obtained using the third camera module 255. According to an embodiment, in addition to the above-described sensor, the wearable electronic device 200 may include a magnetic (geomagnetic) sensor capable of measuring an orientation using a magnetic field and magnetic force lines and/or a hall sensor capable of obtaining motion information (e.g., moving direction or distance) using the strength of a magnetic field. For example, the processor may determine the motion of the electronic device 200 and/or the user's motion based on information obtained from the magnetic (geomagnetic) sensor and/or the hall sensor.

According to an embodiment (not shown), the wearable electronic device 200 may perform an input function (e.g., a touch and/or pressure sensing function) capable of interacting with the user. For example, a component configured to perform a touch and/or pressure sensing function (e.g., a touch sensor and/or a pressure sensor) may be disposed in at least a portion of the wearing member 203. The wearable electronic device 200 may control the virtual image output through the display member 201 based on the information obtained through the components. For example, a sensor associated with a touch and/or pressure sensing function may be formed in various types, e.g., a resistive type, a capacitive type, an electro-magnetic (EM) type, or an optical type. According to an embodiment, the component configured to perform the touch and/or pressure sensing function may be identical in whole or part to the configuration of the input module 150 of FIG. 1.

According to an embodiment, the wearable electronic device 200 may including a reinforcing member 260 that is disposed in an inner space of the lens frame 202 and formed to have a higher rigidity than that of the lens frame 202.

According to an embodiment, the electronic device 200 may include a lens structure 273. The lens structure 273 may refract at least a portion of light. For example, the lens structure 273 may be a prescription lens having a designated refractive index. According to an embodiment, at least a portion of the lens structure 273 may be disposed behind (e.g., +Y direction) of the display member 201. For example, the lens structure 273 may be positioned between the display member 201 and the user's eye.

According to an embodiment, the housing 210 may include a hinge cover 227 that may conceal a portion of the hinge structure 229. Another part of the hinge structure 229 may be received or hidden between an inner cover 231 and an outer cover 233, which are described below.

According to an embodiment, the wearing member 203 may include the inner cover 231 and the outer cover 233. For example, the inner cover 231 may be, e.g., a cover configured to face the user's body or directly contact the user's body, and may be formed of a material having low thermal conductivity, e.g., a synthetic resin. According to an embodiment, the inner cover 231 may include an inner side surface (e.g., the inner side surface 231c of FIG. 2) facing the user's body. For example, the outer cover 233 may include, e.g., a material (e.g., a metal) capable of at least partially transferring heat and may be coupled to the inner cover 231 to face each other. According to an embodiment, the outer cover 233 may include an outer side surface (e.g., the outer side surface 231d of FIG. 2) opposite to the inner side surface 331c. In an embodiment, at least one of the circuit board 241 or the speaker module 245 may be received in a space separated from the battery 243 in the wearing member 203. In the illustrated embodiment, the inner cover 231 may include a first cover 231a receiving the circuit board 241 and/or the speaker module 245 and a second cover 231b receiving the battery 243, and the outer cover 233 may include a third cover 233a coupled to face the first cover 231a and a fourth cover 233b coupled to face the second cover 231b. For example, the first cover 231a and the third cover 233a may be coupled (hereinafter, 'first cover portions 231a and 233a') to receive the circuit board 241 and/or the speaker module 245, and the second cover 231b and the fourth cover 233b may be coupled (hereinafter, 'second cover portions 231b and 233b') to receive the battery 343.

According to an embodiment, the first cover portions 231a and 233a may be rotatably coupled to the lens frame 202 through the hinge structure 229, and the second cover portions 231b and 233b may be connected or mounted to the ends of the first cover portions 231a and 233a through the connecting structure 235. According to an embodiment, a portion of the connecting structure 235 in contact with the user's body may be formed of a material having low thermal conductivity, e.g., an elastic material, such as silicone, polyurethane, or rubber, and another portion thereof which does not come into contact with the user's body may be formed of a material having high thermal conductivity (e.g., a metal). For example, when heat is generated from the circuit board 241 or the battery 243, the connecting structure 235 may block heat transfer to the portion in contact with the user's body while dissipating or discharging heat through the portion not in contact with the user's body. According to an embodiment, a portion of the connecting structure 235 implemented to come into contact with the user's body may be interpreted as a portion of the inner cover 231, and a portion of the connecting structure 235 that does not come into contact with the user's body may be interpreted as a portion of the outer cover 233. According to an embodiment (not shown), the first cover 231a and the second cover 231b may be integrally formed without the connecting structure 235, and the third cover 233a and the fourth cover 233b may be integrally formed without the connecting structure 235. According to an embodiment, other components (e.g., the antenna module 197 of FIG. 1) may be further included in addition to the illustrated components, and information regarding an object or environment may be received from an external electronic device (e.g., the electronic device 102 or 104 of FIG. 1 or the server 108 of FIG. 1) through a network (e.g., the first network 198 or second network 199 of FIG. 1) using a communication module (e.g., the communication module 190 of FIG. 1).

According to an embodiment, the lens frame 202 may include a connection portion 274 disposed between the first display member 201a and the second display member 201b. For example, the connection portion 274 may be interpreted as a portion corresponding to the nose support of the glasses.

According to an embodiment, the electronic device 200 may include a connection member 205. According to an embodiment, the circuit board 241 may be connected to the connection member 205 and transfer electrical signals to the components of the electronic device 200 (e.g., the light output module 211 and/or the camera module 250) through the connection member 205. For example, the control signal transferred from a processor (e.g., the processor 120 of FIG. 1) positioned on the circuit board 241 may be transferred to electronic components by at least a portion of the connection member 205. For example, at least a portion of the connection member 205 may include a line (not shown) electrically connected to components of the electronic device 200.

According to an embodiment, the connection member 205 may include a first connection member 205a at least partially disposed in the first wearing member 203a and a second connection member 205b at least partially disposed in the second wearing member 203b. According to an embodiment, at least a portion of the first connection member 205a and/or the second connection member 205b may face the hinge structure 229. For example, the first connection member 205a may extend from the first circuit board 241a to the inside of the lens frame 202 across the hinge structure 229. The second connection member 205b may extend from the second circuit board 241b to the inside of the lens frame 202 across the hinge structure 229. For example, a portion of the first connection member 205a and a portion of the second connection member 205b may be disposed in the wearing member 203, and another portion may be disposed in the lens frame 202.

According to an embodiment, the first connection member 205a and the second connection member 205b may include a structure that may be folded or unfolded based on rotation of the hinge structure 229. For example, the first connection member 205a and/or the second connection member 205b may include a flexible printed circuit board (FPCB). According to an embodiment, the first connection member 205a may be electrically and/or mechanically connected to the first circuit board 241a. According to an embodiment, the second connection member 205b may be electrically and/or mechanically connected to the second circuit board 241b. According to an embodiment, the first connection member 205a and/or the second connection member 205b may include a structure (e.g., a line and/or cable) for transferring signals.

According to an embodiment, the sensor module 280 (e.g., the sensor module 176 of FIG. 1) may detect the light that has passed through the display member 201. According to an embodiment, the sensor module 280 may include a first sensor module 281 capable of detecting the light passed through the first display member 201a and a second sensor module 282 capable detecting the light passed through the second display member 201b. For example, the first sensor module 281 may detect light from behind the first display member 201a (e.g., +Y direction), and the second sensor module 282 may detect light from behind the second display member 201b. According to an embodiment, the sensor module 280 may include a third sensor module 283 capable of detecting light in front of the display member 201 (e.g., -Y direction). For example, the third sensor module 283 may detect light in front of the display member 201 (e.g., -Y direction). According to an embodiment, the sensor module 280 may be an illuminance sensor. According to an embodiment, the third sensor module 283 may have the same configuration in whole or part as the configuration of the second camera module 253.

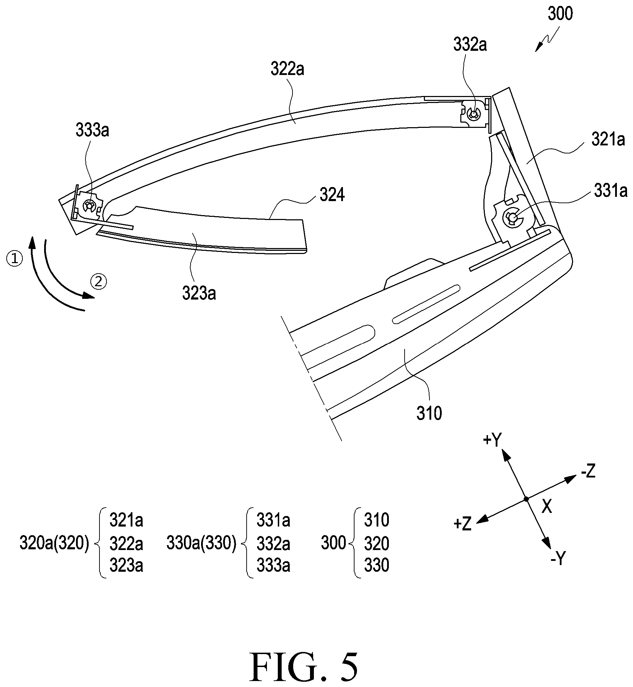

FIG. 5 is a view illustrating a wearable electronic device 300 according to an embodiment of the disclosure.

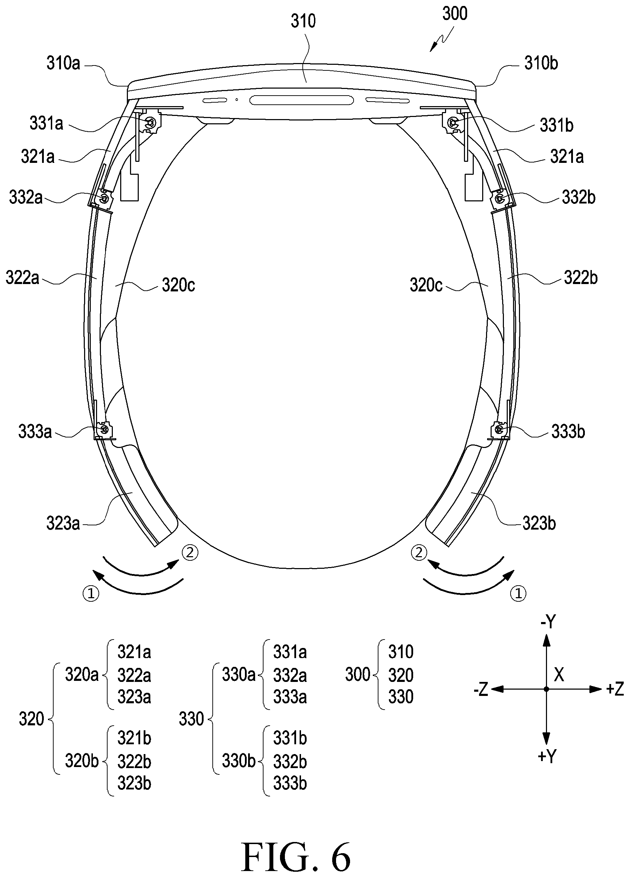

FIG. 6 is a view illustrating a state in which a user wears a wearable electronic device 300 according to an embodiment of the disclosure.

Referring to FIGS. 5 and 6, a wearable electronic device 300 may include a lens frame 310, at least one wearing member 320, and a plurality of hinges 330. The configuration of the wearable electronic device 300, the lens frame 310, the at least one wearing member 320, and the plurality of hinges 330 of FIGS. 5 and 6 may be identical in whole or part to the configuration of the configuration of the wearable electronic device 200, the lens frame 202, the wearing member 203, and the hinge structure 229 of FIGS. 2 to 4. The structure of FIGS. 5 and 6 may be selectively coupled to the structure of FIGS. 2 to 4. According to an embodiment, the wearable electronic device 300 may include at least one display member (e.g., the display member 201 of FIG. 2) capable of outputting a visual image, a lens frame 310 receiving the display member (e.g., the display member 201 of FIG. 2), and at least one wearing member 320.

According to an embodiment, the at least one wearing member 320 may extend from the lens frame 310. For example, the at least one wearing member 320 extends from the end portion of the lens frame 310 and, together with the lens frame 310, may be supported or positioned on the user's body (e.g., ears). According to an embodiment, the at least one wearing member 320 may include a first wearing member 320a extending from a first end portion 310a of the lens frame 310 and a second wearing member 320b extending from a second end portion 310b of the lens frame 310.

According to an embodiment, the at least one wearing member 320 may be rotatably coupled to the lens frame 310 through a plurality of hinges 330. According to an embodiment, the wearable electronic device 300 may include a plurality of hinges 330 configured to fold the at least one wearing member 320 with respect to the lens frame 310. According to an embodiment, the plurality of hinges 330 may include a plurality of first hinges 330a rotatably coupled to the first wearing member 320a and a plurality of second hinges 330b rotatably coupled to the second wearing member 320b. According to an embodiment, the plurality of hinges 330 may be two or more hinges. For example, the plurality of hinges 330 may be about three hinges. For example, the plurality of first hinges 330a and the plurality of second hinges 330b may include three hinges.

According to an embodiment, the at least one wearing member 320 may include a first portion 321a or 321b connected to the lens frame 310, a second portion 322a or 322b formed to extend from the first portion 321a or 321b, and a third portion 323a or 323b formed to extend from the second portion 322a or 322b, with respect to a portion folded by the plurality of hinges 330. For example, the first wearing member 320a may include a first portion 321a extending from the first end portion 310a of the lens frame 310, a second portion 322a formed to extend from the first portion 321a, and a third portion 323a formed to extend from the second portion 322a. For example, the second wearing member 320b may include a first portion 321b extending from the second end portion 310b of the lens frame 310, a second portion 322b formed to extend from the first portion 321b, and a third portion 323b formed to extend from the second portion 322b. Hereinafter, for convenience of description, the first portion 321a, the second portion 322a, and the third portion 323a of the first wearing member 320a are described. However, the following description may be substantially equally applied to the first portion 321b, the second portion 322b, and the third portion 323b of the second wearing member 320b.

According to an embodiment, the first portion 321a, the second portion 322a, and the third portion 323a of the first wearing member 320a may be coupled through the plurality of hinges 330. According to an embodiment, the first portion 321a, the second portion 322a, and/or the third portion 323a may be formed in a straight line shape, and may include a curved portion corresponding to the user's head.

According to an embodiment, the plurality of hinges 330 may include a first hinge 331a or 331b positioned between the lens frame 310 and the first portion 321a or 321b of at least one wearing member 320, a second hinge 332a or 332b positioned between the first portion 321a or 321b and the second portion 322a or 322b of the at least one wearing member 320, and a third hinge 333a or 333b positioned between the second portion 322a or 322b and the third portion 323a or 323b of the at least one wearing member 320. For example, the plurality of hinges 330 may include a first hinge 331a between the lens frame 310 and the first portion 321a of the first wearing member 320a, a second hinge 332a between the first portion 321a and the second portion 322a of the first wearing member 320a, and a third hinge 333a between the second portion 322a and the third portion 323a of the first wearing member 320a. For example, the plurality of hinges 330 may include a first hinge 331b between the lens frame 310 and the first portion 321b of the second wearing member 320b, a second hinge 332b between the first portion 321b and the second portion 322b of the second wearing member 320b, and a third hinge 333b between the second portion 322b and the third portion 323b of the second wearing member 320b. Hereinafter, for convenience of description, the first hinge 331a, the second hinge 332a, and the third hinge 333a positioned in the first wearing member 320a are described. However, the following description may be applied to the first hinge 331b, the second hinge 332b, and the third hinge 333b positioned in the second wearing member 320b in substantially the same manner.

According to an embodiment, the first portion 321a may be coupled to the lens frame 310 through the first hinge 331a. According to an embodiment, the first portion 321a may be rotatably connected to the lens frame 310 in an outward direction (e.g., in the direction ① of FIG. 5) by the first hinge 331a. According to an embodiment, the first portion 321a may extend in a substantially vertical direction with respect to the lens frame 310. According to an embodiment, in a state in which the user wears the wearable electronic device 300, the first portion 321a may be positioned on the user's side surface. For example, in a state in which the user wears the wearable electronic device 300, the first portion 321a may be positioned between the user's eye and ear.

According to an embodiment, the second portion 322a may be connected to the first portion 321a through the second hinge 332a. According to an embodiment, the second portion 322a may be rotatably connected to the first portion 321a in an outward direction (e.g., direction ① of FIG. 5) and/or in an inward direction (e.g., direction ② of FIG. 5) by the second hinge 332a. According to an embodiment, in a state in which the user wears the wearable electronic device 300, the second portion 322a may be positioned on the user's side surface. For example, in a state in which the user wears the wearable electronic device 300, the second portion 322a may be supported by the user's ear.

According to an embodiment, the third portion 323a may be connected to the second portion 322a through the third hinge 333a. According to an embodiment, the third portion 323a may be rotatably connected to the second portion 322a in the outward direction (e.g., direction ① of FIG. 5) and/or in the inward direction (e.g., direction ② of FIG. 5) by the third hinge 333a. According to an embodiment, in a state in which the user wears the wearable electronic device 300, the third portion 323a may be positioned on the side surface and the rear surface of the user. For example, in a state in which the user wears the wearable electronic device 300, the third portion 323a may be positioned on the occipital portion of the user.

According to an embodiment, the third portion 323a may include a support pad 324 configured to at least partially contact the user's head to fix the position of the wearable electronic device 300. According to an embodiment, the support pad 324 may be attached to the inner surface 320c of the third portion 323a. According to an embodiment, the third portion 323a formed to allow the support pad 324 to be attached thereto may have a relatively wide cross-sectional area compared to other portions of the wearing member 320. For example, the height of the end portion of the third portion 323a (e.g., the length in the X-axis direction of FIG. 5) may be relatively large compared to the height of other portions of the temple (e.g., the length in the X-axis direction of FIG. 5). According to an embodiment, at least a portion of the support pad 324 may contact the occipital portion of the user. The wearability of the wearable electronic device 300 may be increased by disposing the support pad 324 on the end portion of the at least one wearing member 320.

According to an embodiment, the wearable electronic device 300 may increase the wearability by connecting at least three portions included in the at least one wearing member 320 using the plurality of hinges 330 so that at least three portions may correspond to the user's head according to the position. In general wearable electronic devices, when they have one hinge, an end portion of the wearing member 320 may be lifted off as it differs in shape from the user's head. However, according to an embodiment of the present invention, a plurality of hinges 330 are used to enable adjustment of the angle between portions of the wearing member 320 to fit the user's head shape up to the end portion of at least one wearing member 320.

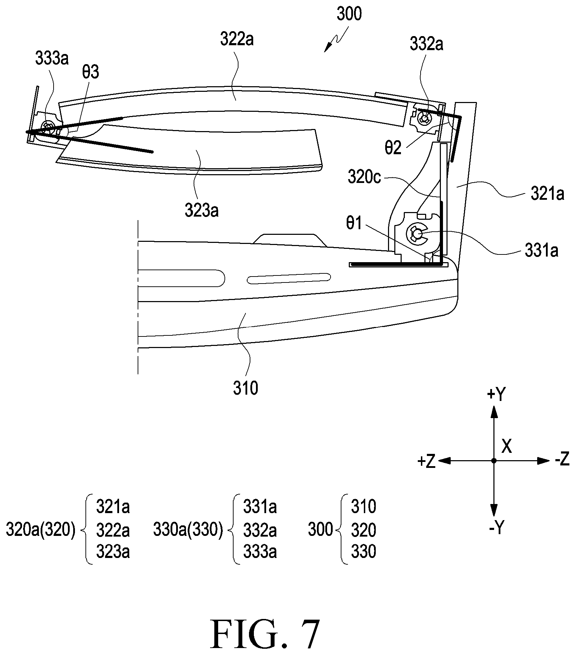

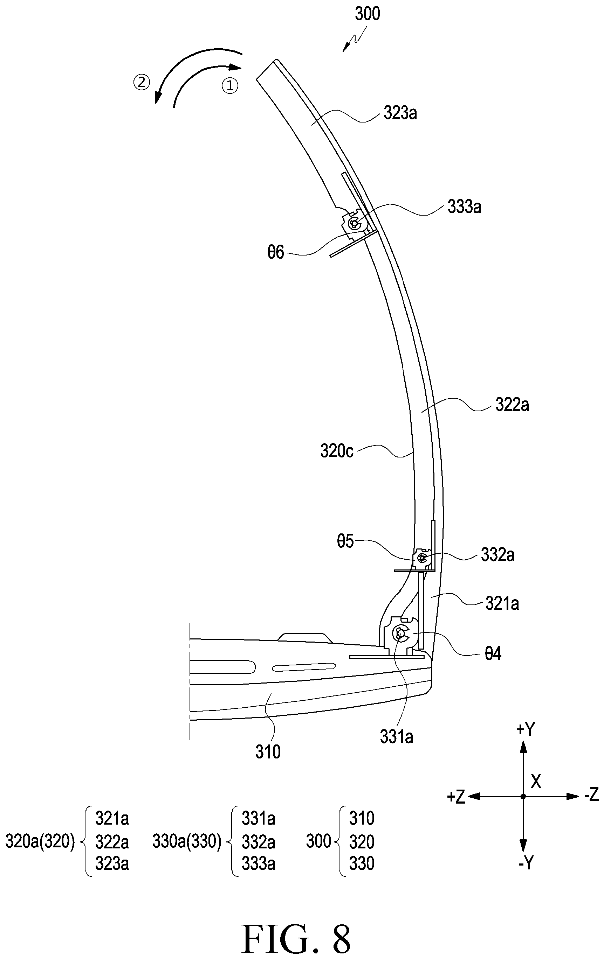

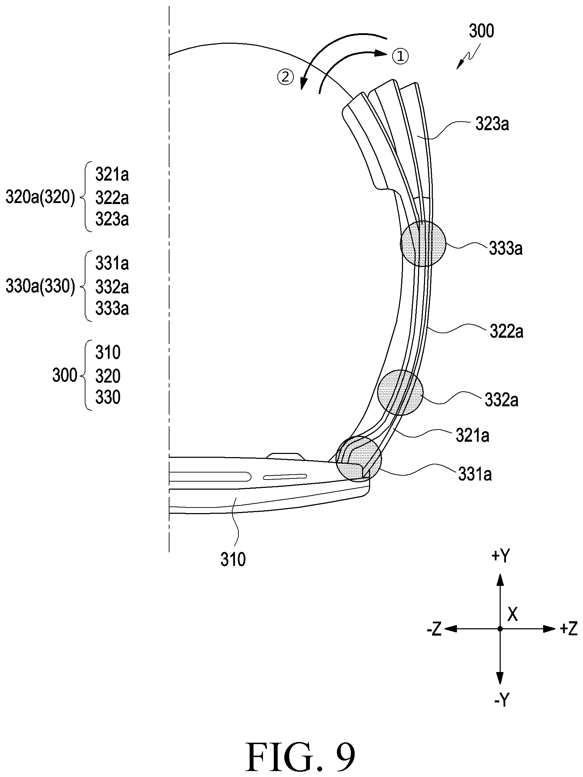

FIG. 7 is a view illustrating a folded state (first state) of a wearable electronic device 300 according to an embodiment of the disclosure. FIG. 8 is a view illustrating an unfolded state (second state) of a wearable electronic device 300 according to an embodiment of the disclosure. FIG. 9 is a view illustrating an intermediate state (third state) of a wearable electronic device 300 according to an embodiment of the disclosure.

Referring to FIGS. 7 to 9, the wearable electronic device 300 may include a lens frame 310, at least one wearing member 320, and a plurality of hinges 330. The configuration of the wearable electronic device 300, the lens frame 310, at least one wearing member 320, and the plurality of hinges 330 of FIGS. 7 to 9 may be identical in whole or part to the configuration of the wearable electronic device 300, the lens frame 310, at least one wearing member 320, and the plurality of hinges 330 of FIGS. 5 and 6. The structure of FIGS. 7 to 9 may be selectively combinable with the structures of FIGS. 5 and 6.

According to an embodiment, at least one wearing member 320 may be rotatably connected to the lens frame 310 using a plurality of hinges 330. For example, the first portion 321a of at least one wearing member 320 may be rotatably connected to the lens frame 310. For example, the second portion 322a of at least one wearing member 320 may be rotatably connected to the first portion 321a. For example, the third portion 323a of at least one wearing member 320 may be rotatably connected to the second portion 322a. According to an embodiment, the wearable electronic device 300 may be changed to a folded state (e.g., FIG. 7) or an unfolded state (e.g., FIG. 8).

According to an embodiment, the state illustrated in FIG. 7 may be referred to as a folded state (first state) of the wearable electronic device 300. The folded state (first state) may be a state in which the user does not wear the wearable electronic device 300. For example, the folded state (first state) may be a state when the wearable electronic device 300 is stored in a case.

According to an embodiment, the state illustrated in FIG. 8 may be referred to as an unfolded state (second state) of the wearable electronic device 300. For example, the unfolded state (second state) may be a state in which the user does not wear the wearable electronic device 300.

According to an embodiment, the state illustrated in FIG. 9 may be referred to as a state (third state) in which the user wears the wearable electronic device 300. For example, the worn state (third state) may be a state in which it is further unfolded in the outward direction (e.g., direction ① of FIG. 5) than the unfolded state (e.g., the fully opened state) of FIG. 8 according to the user's head. The shape and structure of at least one wearing member 320 of the wearable electronic device 300 in the worn state (third state) may be different according to the user's head.

According to an embodiment, a portion of the inner surface (e.g., the inner surface 320c of FIG. 5) of at least one wearing member 320 may face the lens frame 310 in the folded state of the wearable electronic device 300. For example, at least a portion of the inner surface (e.g., the inner surface 320c of FIG. 5) of the second portion 322a of the at least one wearing member 320 may face the lens frame 310 in the folded state of the wearable electronic device 300. The directions in which the inner surfaces (e.g., the inner surface 320c of FIG. 5) of the second portion 322a of the first wearing member 320a and the second portion (e.g., the second portion 322b of FIG. 6) of the second wearing member (e.g., the second wearing member 320b of FIG. 6) face may be substantially the same. According to an embodiment, the at least one wearing member 320 may provide relative rotation with respect to the lens frame 310.

According to an embodiment, the angle between the lens frame 310 and the first portion 321a, the angle between the first portion 321a and the second portion 322a, or the angle between the second portion 322a and the third portion 323a may be changed depending on whether the state of the wearable electronic device 300 is the unfolded state (second state), the folded state (first state), or the worn state (third state).

According to an embodiment, the angle between the lens frame 310 and the first portion 321a, the angle between the first portion 321a and the second portion 322a, or the angle between the second portion 322a and the third portion 323a may be changed depending on the shape of the user's head in the worn state (third state). In the wearable electronic device 300 according to an embodiment of the present invention, the shape of at least one wearing member 320 may be changed according to the user's head, thereby increasing the wearability.

According to an embodiment, the plurality of hinges 330 may be covered by a portion of the at least one wearing member 320 or exposed to the outside of the wearable electronic device 300 according to the state of the wearable electronic device 300. For example, when the wearable electronic device 300 is in the folded state (first state), at least some of the plurality of hinges 330 may be exposed to the outside of the wearable electronic device 300. For example, when the wearable electronic device 300 is in the unfolded state (second state), the plurality of hinges 330 may be covered by the first portion 321a, the second portion 322a, and the third portion 323a of at least one wearing member 320. For example, when the wearable electronic device 300 is in the state (third state) worn by the user, the plurality of hinges 330 may be partially covered by the first portion 321a, the second portion 322a, and the third portion 323a of the at least one wearing member 320 and at least partially exposed to the outside. An area in which the plurality of hinges 330 are exposed to the outside in the worn state (third state) may be smaller or larger than that in the unfolded state (second state).

According to an embodiment, in a state in which the user is not wearing the wearable electronic device 300, the user may fold at least one wearing member 320 to partially overlap the lens frame 310 and carry or store it.

According to an embodiment, referring to FIG. 7, the shape and structure of at least one wearing member 320 in the folded state (first state) in which the user does not wear the wearable electronic device 300 are as follows.

According to an embodiment, the first portion 321a may be disposed substantially perpendicular to the lens frame 310. According to an embodiment, in the first state, the angle θ1 between the inner surface 320c of the first portion 321a and the lens frame 310 may be about 80 degrees or more and about 100 degrees or less. For example, the inner surface 320c of the first portion 321a may be in a state of forming an angle of about 80 degrees or more and 100 degrees or less with respect to the lens frame 310. For example, the inner surface 320c of the first portion 321a may be in a state of forming an angle of about 90 degrees with respect to the lens frame 310.

According to an embodiment, in the first state, the inner surface 320c of the second portion 322a and the inner surface 320c of the first portion 321a may form an angle of about 70 degrees or more to 110 degrees or less. According to an embodiment, in the first state, the angle θ2 between the first portion 321a and the second portion 322a may be 70 degrees or more and 110 degrees or less. For example, the second portion 322a may form about 90 degrees with respect to the first portion 321a. For example, the second portion 322a may be in a state of being folded by about 90 degrees with respect to the first portion 321a. For example, the second portion 322a may be in a state of being placed substantially parallel to the lens frame 310.

According to an embodiment, in the first state, the third portion 323a may be in a state of being folded by about 0 degree or more and 30 degrees or less with respect to the second portion 322a. According to an embodiment, in the first state, the angle θ3 between the third portion 323a and the second portion 322a may be about 0 degree or more and 30 degrees or less. For example, in the first state, the angle between the inner surface 320c of the second portion 322a and the inner surface 320c of the third portion 323a may be about 0 degrees or more and 30 degrees or less. For example, the third portion 323a and the second portion 322a may form about 10 degrees. For example, the third portion 323a may be in a state of being folded by about 10 degrees with respect to the second portion 322a.

According to an embodiment, in the wearable electronic device 300 according to the present invention, it is possible to reduce the size in the folded state (first state) and provide convenient storage by disposing a plurality of hinges.

According to an embodiment, referring to FIG. 8, the shape and structure of at least one wearing member 320 when the wearable electronic device 300 is in the unfolded state (second state) are as follows.

According to an embodiment, the first portion 321a may be disposed perpendicular to the lens frame 310. According to an embodiment, in the second state, the angle θ4 between the first portion 321a and the lens frame 310 may be about 80 degrees or more and about 100 degrees or less. For example, the first portion 321a may be in a state of being unfolded by about 80 degrees or more and 100 degrees or less with respect to the lens frame 310. For example, in the second state, the angle between the inner surface 320c of the first portion 321a and the lens frame 310 may be about 80 degrees or more and 100 degrees or less. For example, the first portion 321a may be in a state of being unfolded by about 90 degrees with respect to the lens frame 310. The angle formed by the first portion 321a with respect to the lens frame 310 may be substantially the same in the folded state (first state) and the unfolded state (second state).

According to an embodiment, when the second portion 322a is in the unfolded state (second state), the second portion 322a may be further unfolded by about 90 degrees or less than when it is in the folded state (first state). According to an embodiment, in the second state, the angle θ5 between the first portion 321a and the second portion 322a may be about 180 degrees or less. For example, the second portion 322a may be in a state of being unfolded by about 180 degrees or less with respect to the first portion 321a (second state). For example, in the second state, the angle between the inner surface 320c of the first portion 321a and the inner surface 320c of the second portion 322a may be about 80 degrees or more and 100 degrees or less. For example, the second portion 322a may form about 180 degrees with respect to the first portion 321a. For example, the second portion 322a may be in a state of being unfolded by about 180 degrees with respect to the first portion 321a. For example, the second portion 322a may be placed substantially parallel to the first portion 321a.

According to an embodiment, in the unfolded state (second state), the third portion 323a may be further unfolded by about 150 degrees or less than in the folded state (first state). For example, in the unfolded state, the third portion 323a may be further unfolded by about 130 degrees or less than in the folded state (first state). According to an embodiment, in the second state, the angle θ6 between the third portion 323a and the second portion 322a may be about 180 degrees or less. According to an embodiment, the third portion 323a may be in a state (second state) of being unfolded by about 180 degrees or less with respect to the second portion 322a. For example, in the second state, the angle between the inner surface 320c of the second portion 322a and the inner surface 320c of the third portion 323a may be about 180 degrees or less. For example, the third portion 323a and the second portion 322a may form about 160 degrees.

According to an embodiment, in the unfolded state (second state), the overall shape of at least one wearing member 320 including the first portion 321a, the second portion 322a, and the third portion 323a may be a curved shape bent inward (e.g., in direction ② of FIG. 8) to correspond to the user's head.

According to an embodiment, referring to FIG. 9, the shape and structure of at least one wearing member 320 when the user is in a state (third state) of wearing the wearable electronic device 300 are as follows.

According to an embodiment, in the worn state (third state), the first portion 321a may receive a force in the outward direction ① (e.g., direction ① of FIG. 5) by the user's head rather than in the unfolded state (second state). For example, in the worn state (third state), the first portion 321a may be in a state of being further unfolded by about 0 degrees or more and 20 degrees or less than the in unfolded state (second state). For example, in the worn state (third state), the first portion 321a may be in a state of being further unfolded by about 0 degrees or more and 15 degrees or less than in the unfolded state (second state). For example, the first portion 321a may be in a state of being unfolded by about 90 degrees or more and 120 degrees or less with respect to the lens frame 310. For example, the angle between the inner surface 320c of the first portion 321a and the lens frame 310 may be larger by about 0 degrees or more and 20 degrees or less in the worn state (third state) than in the unfolded state (second state).

According to an embodiment, in the worn state (third state), the second portion 322a may receive a force in the outward direction ① by the user's head or in the inward direction ② by the second hinge 332a according to the user's head rather than the unfolded state (second state). For example, when the user's head is relatively large, the second portion 322a in the worn state (third state) may be further unfolded than the second portion 322a in the unfolded state (second state). For example, the angle between the inner surface 320c of the first portion 321a and the inner surface 320c of the second portion 322a may be larger in the worn state (third state) than in the unfolded state (second state) according to the user's head. For example, if the user's head is relatively small, the second portion 322a in the worn state (third state) may be unfolded at substantially the same angle as the second portion 322a in the unfolded state (second state). Considering the user's small head, the second portion 322a in the unfolded state (second state) and/or the worn state (third state) may be bent in the inward direction ② as compared with the general wearing member. For example, the second portion 322a in the worn state (third state) may differ by about 0 degrees or more and 20 degrees or less from the second portion 322a in the unfolded state (second state). For example, the second portion 322a may be in a state of being unfolded by about 80 degrees or more and 120 degrees or less with respect to the first portion 321a.

According to an embodiment, the third portion 323a may receive a force in the outward direction ① by the user's head or in the inward direction ② by the third hinge 333a according to the user's head rather than the unfolded state (second state). For example, when the user's head is relatively large, the third portion 323a in the worn state (third state) may be further unfolded than the second portion 322a in the unfolded state (second state). For example, according to the user's head, the angle between the inner surface 320c of the third portion 323a and the inner surface 320c of the second portion 322a may be larger in the worn state (third state) than in the unfolded state (second state). For example, when the user's head is relatively small, the third portion 323a in the worn state (third state) may be unfolded at substantially the same angle as the third portion 323a in the unfolded state (second state). Considering the user's small head, the third portion 323a in the unfolded state (second state) and/or the worn state (third state) may be bent in the inward direction ② as compared with the general wearing member. For example, the third portion 323a in the worn state (third state) may differ by about 0 degrees or more and 20 degrees or less from the third portion 323a in the unfolded state (second state). For example, the third portion 323a may be in a state of being unfolded by about 140 degrees or more and 200 degrees or less with respect to the second portion 322a.

According to an embodiment, as the second portion 322a and/or the third portion 323a may receive force in two directions such as the outward direction ① and/or the inward direction ② in the worn state (third state) rather than in the unfolded state (second state), it is possible to respond to various user head shapes per race or size, and to increase wearability according to various user head shapes.

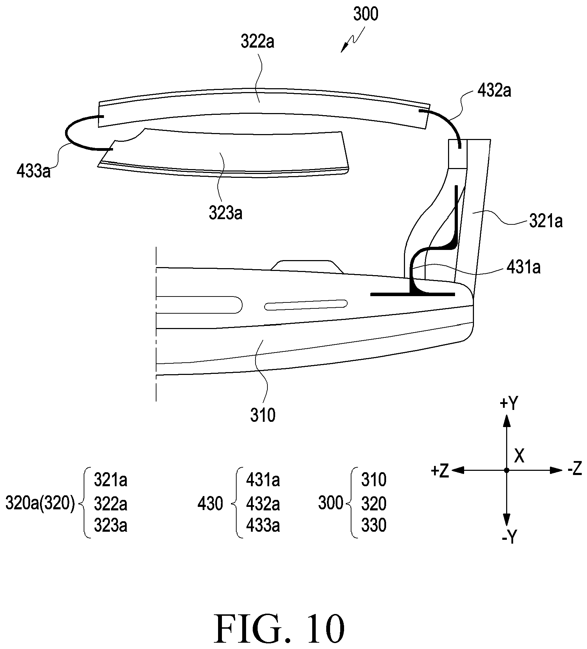

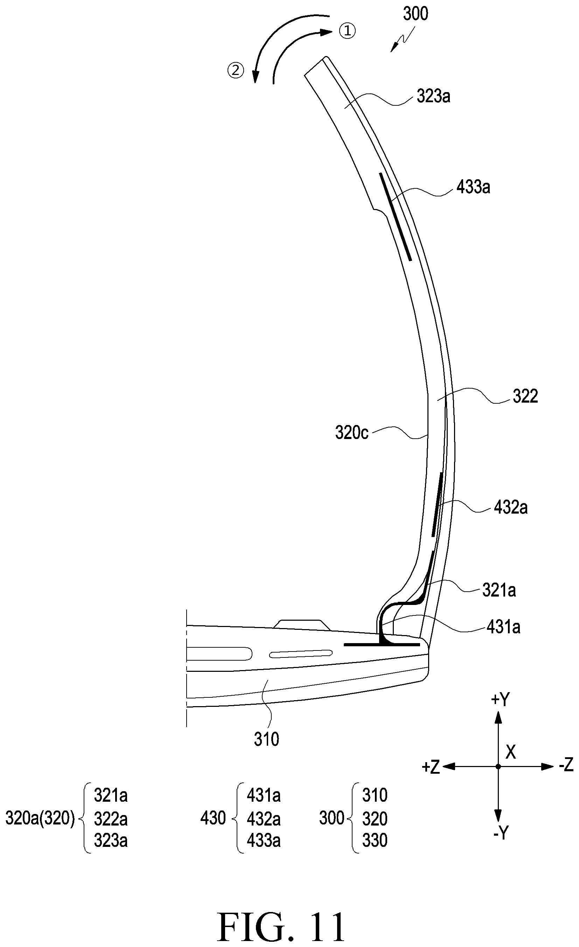

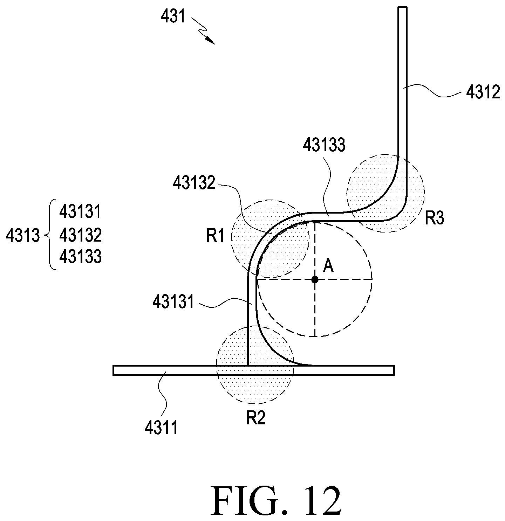

FIG. 10 is a view illustrating a folded state (first state) of a wearable electronic device 300 including a plurality of leaf springs 430 according to an embodiment of the disclosure. FIG. 11 is a view illustrating a state (third state) of wearing a wearable electronic device 300 including a plurality of leaf springs 430 according to an embodiment of the disclosure. FIG. 12 is a view illustrating a first leaf spring 431 according to an embodiment of the disclosure.

Referring to FIGS. 10 to 12, the wearable electronic device 300 may include a lens frame 310, at least one wearing member 320, and a plurality of leaf springs 430. The configuration of the wearable electronic device 300, the lens frame 310, the at least one wearing member 320, and the plurality of leaf springs 430 of FIGS. 10 to 12 may be identical in whole or part to the configuration of the wearable electronic device 300, the lens frame 310, the at least one wearing member 320, and the plurality of hinges 330 of FIGS. 7 to 9. The structures of FIGS. 10 to 12 may be selectively combined with the structures of FIGS. 7 to 9.

According to an embodiment, the wearable electronic device 300 may include a plurality of leaf springs 430 configured to fold the at least one wearing member 320 with respect to the lens frame 310. According to an embodiment, the first wearing member 320a and the second wearing member (e.g., the second wearing member 320b of FIG. 6) of the wearable electronic device 300 may each include a plurality of leaf springs 430. For example, the plurality of leaf springs 430 may be two or more leaf springs. For example, the plurality of leaf springs 430 may be about three leaf springs.

According to an embodiment, a plurality of leaf springs 430 may include a first leaf spring 431a positioned between the lens frame 310 and the first portion 321a of the first wearing member 320a, a second leaf spring 432a positioned between the first portion 321a and the second portion 322a of the first wearing member 320a, and a third leaf spring 433a positioned between the second portion 322a and the third portion 323a of the first wearing member 320a. Hereinafter, for convenience of description, the first hinge 331a, the second hinge 332a, and the third hinge 333a positioned in the first wearing member 320a are described. However, the following description may be applied to the first hinge (not shown), the second hinge (not shown), and the third hinge (not shown) positioned in the second wearing member 320b in substantially the same manner.

According to an embodiment, the plurality of leaf springs 430 may be covered by a portion of the at least one wearing member 320 or exposed to the outside of the wearable electronic device 300 according to the state of the wearable electronic device 300. For example, when the wearable electronic device 300 is in the folded state (first state), at least some of the plurality of leaf springs 430 may be exposed to the outside of the wearable electronic device 300. For example, when the wearable electronic device 300 is in the unfolded state (second state), the plurality of leaf springs 430 may be covered by the first portion 321a, the second portion 322a, and the third portion 323a of at least one wearing member 320. For example, in the state (third state) of wearing the wearable electronic device 300, the plurality of leaf springs 430 may be partially covered by the first portion 321a, the second portion 322a, and the third portion 323a of the at least one wearing member 320 and at least partially exposed to the outside. An area in which the plurality of leaf springs 430 are exposed to the outside in the worn state (third state) may be smaller than that in the folded state (first state).

According to an embodiment, referring to FIG. 10, the shape and structure of at least one wearing member 320 in the folded state (first state) in which the user does not wear the wearable electronic device 300 including the plurality of leaf springs 430 are as follows.

According to an embodiment, the first portion 321a may be disposed substantially perpendicular to the lens frame 310. For example, the first portion 321a may be in a state in which an angle of about 70 degrees or more and 100 degrees or less is formed with respect to the lens frame 310. For example, the first portion 321a may be in a state (second state) of being unfolded by about 90 degrees with respect to the lens frame 310.

According to an embodiment, the second portion 322a may be unfolded by about 70 degrees or more and 100 degrees or less with respect to the first portion 321a. For example, the second portion 322a may form about 90 degrees with respect to the first portion 321a. For example, the second portion 322a may be unfolded by about 90 degrees with respect to the first portion 321a. For example, the second portion 322a may be in a state of being placed substantially parallel to the lens frame 310.

According to an embodiment, the third portion 323a may be in a state (second state) of being unfolded by about 0 degrees or more and 30 degrees or less with respect to the second portion 322a. For example, the third portion 323a and the second portion 322a may form about 10 degrees. For example, the third portion 323a may be in a state (second state) of being unfolded by about 10 degrees with respect to the second portion 322a.

According to an embodiment, in the wearable electronic device 300 according to the present invention, it is possible to reduce the size in the folded state (first state) and provide convenient storage by disposing a plurality of leaf springs 430.

According to an embodiment, referring to FIG. 11, the shape and structure of at least one wearing member 320 in the state (third state) of wearing the wearable electronic device 300 including the plurality of leaf springs 430 are as follows.

According to an embodiment, the first portion 321a may receive a force in the outward direction ① (e.g., direction ① of FIG. 9) by the user's head rather than in the folded state (first state). For example, in the worn state (third state), the first portion 321a may be in a state of being further unfolded by about 0 degrees or more and 20 degrees or less than in the folded state (first state). For example, in the worn state (third state), the first portion 321a may be further unfolded by about 0 degrees or more and 15 degrees or less than the folded state (first state). For example, the first portion 321a may be unfolded by about 90 degrees or more and 120 degrees or less with respect to the lens frame 310. For example, the angle between the inner surface 320c of the first portion 321a and the lens frame 310 may be larger by about 0 degrees or more and 20 degrees or less in the worn state (third state) than in the folded state (first state).

According to an embodiment, in the worn state (third state), the second portion 322a may be further unfolded by 90 degrees or less than in the folded state (first state). The second portion 322a may be unfolded by about 190 degrees or less with respect to the first portion 321a. For example, the second portion 322a may form about 180 degrees with respect to the first portion 321a. For example, the second portion 322a may be unfolded by about 180 degrees with respect to the first portion 321a. For example, the second portion 322a may be placed substantially parallel to the first portion 321a.

According to an embodiment, in the worn state (third state), the third portion 323a may be further unfolded by 150 degrees or less than in the folded state (first state). For example, in the worn state (third state), the third portion 323a may be further unfolded by 130 degrees or less than in the folded state (first state). According to an embodiment, the third portion 323a may be unfolded by about 180 degrees or less with respect to the second portion 322a. For example, the third portion 323a and the second portion 322a may form about 160 degrees.

According to an embodiment, in the worn state (third state), the overall shape of at least one wearing member 320 including the first portion 321a, the second portion 322a, and the third portion 323a may form a curved shape to correspond to the user's head.

According to an embodiment, the plurality of leaf springs 430 may be an elastic structure that has one end portion and the other end portion fixed to two different structures (e.g., the lens frame 310, the first portion 321a, the second portion 322a, and/or the third portion 323a) to be recovered to their original state from the respective structures. When at least one wearing member 320 is extended in the outward direction ① or inward direction ②, it may be supported by elastic force. There may be provided a wearable electronic device 300 that provides better wearability to various users by the elastic force of the plurality of leaf springs 430 despite a different head shape and size.

According to an embodiment, referring to FIG. 12, a first leaf spring 431 (e.g., the first leaf spring 431a of FIG. 10) may include a first bar 4311 having at least a portion embedded in an end portion of the lens frame 310, a second bar 4312 disposed perpendicular to the first bar 4311 and having at least a portion embedded in an end portion of the first portion 321a, and a connection portion 4313 connecting the first bar 4311 and the second bar 4312. The connection portion 4313 may be connected in a vertical direction from a central portion of the first bar 4311. The connection unit 4313 may include a first straight portion 43131 vertically connected to the first bar 4311, a curved portion 43132 connected as a curve R1 by taking A as a rotational axis from the first straight portion 43131, and a second connection portion 43133 extending from the curved portion 43132 and perpendicular to the first connection portion 43131. The first straight portion 43131 of the connection portion 4313 may include a curve R2 at an end portion connected to the first bar 4311. The second straight portion 43133 of the connection portion 4313 may include a curve R3 at an end portion connected to the second bar 4312. When the lens frame 310 and the first portion 321a are spread, the first bar 4311 connected to the lens frame 310 and the second bar 4312 connected to the first portion 321a may change the curvature of the curves R1, R2, and R3 of the connection portion 4313. For example, when changing from the folded state (first state) to the worn state (third state), the curvature of the curves R1 and R2 may increase and the curvature of the curve R3 may decrease. When the lens frame 310 and the first portion 321a are spread, a force may be received inward by elastic force, so that the position may be fixed to correspond to the user's head.

According to an embodiment, the second leaf spring 432 may have a straight bar shape. It may be in a state (first state) of being folded by about 90 degrees in the folded state (first state), and be unfolded by about 180 degrees in the unfolded state (second state).

According to an embodiment, the third leaf spring 433 may have a straight bar shape. It may be in a state (first state) of being folded by about 90 degrees in the folded state (first state), and be unfolded by about 180 degrees in the unfolded state (second state).

A head-mounted wearable device is a wearable electronic device shaped as the frame of glasses with a display member and capable of processing virtual objects through the display member and may include virtual reality (VR) glasses or augmented reality (AR) glasses.

Recent glasses-type wearable electronic devices are in the trend of being designed to have a form factor very similar to regular glasses to stress on design elements such as being made more compact or fashionable.

According to an embodiment, enhanced wearability may be achieved by dividing the temple into three portions using a plurality of hinges and allowing them to correspond to the user's head. In the general wearable electronic devices with one hinge, the third portion 323 may be lifted off as it does not fit the user's head. However, according to an embodiment of the present invention, a plurality of hinges are used to enable angle adjustment to fit the user's head shape up to the end portion of the temple.

According to an embodiment, in the wearable electronic device (e.g., 300 of FIG. 5) according to the present invention, it is possible to reduce the size in the folded state (first state) (e.g., a state when it is stored) and provide convenient storage by disposing a plurality of hinges (e.g., 330 of FIG. 5).

Effects of the disclosure are not limited to the foregoing, and other unmentioned technical effects would be apparent to one of ordinary skill in the art to which an embodiment of the disclosure pertains.

A wearable electronic device according to an embodiment of the disclosure may comprise a lens frame (310 of FIG. 5) configured to receive a display member (301 of FIG. 5), and a temple (320 of FIG. 5) including a first portion (321a of FIG. 5) connected to the lens frame, a second portion (322a of FIG. 5) extending from the first portion, a third portion (323a of FIG. 5) extending from the second portion, and a plurality of hinges. The plurality of hinges (330 of FIG. 5) may include a first hinge (331a of FIG. 5) positioned between the lens frame and the first portion of the temple and having at least a portion configured to be rotatable in an outward direction (e.g., direction ① of FIG. 5) based on a user wearing the wearable electronic device, a second hinge (332a of FIG. 5) positioned between the first portion and the second portion of the temple and having at least a portion configured to be rotatable in the outward direction or an inward direction (e.g., direction ② of FIG. 5) based on the user wearing the wearable electronic device, and a third hinge (333a of FIG. 5) positioned between the second portion and the third portion of the temple and having at least a portion configured to be rotatable in the outward direction or the inward direction based on the user wearing the wearable electronic device.

According to an embodiment, in a first state in which the wearable electronic device is folded and a second state in which the wearable electronic device is unfolded, an angle (e.g., θ1 of FIG. 7 or θ4 of FIG. 8) between the first portion and the lens frame may be 80 degrees or more, and 100 degrees or less.

According to an embodiment, in the first state, an angle (e.g., θ2 of FIG. 7) between the first portion and the second portion is 70 degrees or more, and 110 degrees or less, and in the second state, the angle (e.g., θ5 of FIG. 8) between the first portion and the second portion may be 180 degrees or less.

According to an embodiment, in the first state, an angle (e.g., θ3 of FIG. 7) between the third portion and the second portion is 0 degrees or more, and 30 degrees or less, and in the second first state, the angle (e.g., θ6 of FIG. 8) between the third portion and the second portion may be 180 degrees or less.

According to an embodiment, in a third state in which the user wears the wearable electronic device, an angle between the lens frame and the first portion, an angle between the first portion and the second portion, and an angle between the second portion and the third portion may be changed based on a user's head shape.

According to an embodiment, in the third state, the first portion may be formed to receive a force in the outward direction by the user's head.

According to an embodiment, the first portion in the third state may be formed to be rotated by 0 degrees or more to 20 degrees or less in the outward direction (e.g., direction (1) of FIG. 5) with respect to the lens frame as compared with the first portion in the second state.

According to an embodiment, in the third state, the second portion may be formed to receive a force in the outward direction or the inward direction by the user's head.

According to an embodiment, the second portion in the third state may be formed to be rotated by 0 degrees or more to 20 degrees or less in the outward direction, or by 0 degrees or more to 20 degrees or less in the inward direction with respect to the lens frame as compared with the second portion in the second state.

According to an embodiment, in the third state, the third portion may be formed to receive a force in the outward direction or the inward direction by the user's head.

According to an embodiment, the third portion in the third state may be formed to be rotated by 0 degrees or more to 20 degrees or less in the outward direction, or by 0 degrees or more to 20 degrees or less in the inward direction with respect to the lens frame as compared with the third portion in the second state.

According to an embodiment, the third portion may include a support pad (324 of FIG. 5) configured to at least partially contact the user's head to fix a position of the wearable electronic device.

A wearable electronic device according to an embodiment of the disclosure may comprise a lens frame (310 of FIG. 5) configured to receive a display member (301 of FIG. 5), and a temple (320 of FIG. 5) including a first portion (321a of FIG. 5) connected to the lens frame, a second portion (322a of FIG. 5) extending from the first portion, a third portion (323a of FIG. 5) extending from the second portion, and a plurality of leaf springs (430 of FIG. 11). The plurality of leaf springs may include a first leaf spring (431a of FIG. 11) positioned between the lens frame and the first portion of the temple and having at least a portion configured to be rotatable in an outward direction (e.g., direction ① of FIG. 5) when a user wears the wearable electronic device, a second leaf spring (432a of FIG. 11) positioned between the first portion and the second portion of the temple and having at least a portion configured to be rotatable in the outward direction or an inward direction (e.g., direction ② of FIG. 5) when the user wears the wearable electronic device, and a third leaf spring (433a of FIG. 11) positioned between the second portion and the third portion of the temple and having at least a portion configured to be rotatable in the outward direction or the inward direction when the user wears the wearable electronic device.

According to an embodiment, the first leaf spring may include a first bar (4311 of FIG. 12) having at least a portion embedded in an end portion of the lens frame, a second bar (4312 of FIG. 12) having at least a portion embedded in an end portion of the first portion, and a connection portion (4313 of FIG. 12) connecting the first bar and the second bar.

According to an embodiment, in a first state in which the wearable electronic device is folded, an angle (e.g., θ1 of FIG. 7 or θ4 of FIG. 8) between the first portion and the lens frame may be 80 degrees or more, and 100 degrees or less, an angle (e.g., θ2 of FIG. 7) between the first portion and the second portion may be 70 degrees or more, and 110 degrees or less, and an angle (e.g., θ3 of FIG. 7) between the third portion and the second portion may be 10 degrees or more and 30 degrees or less.

According to an embodiment, in a second state in which the wearable electronic device is unfolded, the angle (e.g., θ1 of FIG. 7 or θ4 of FIG. 8) between the first portion and the lens frame may be 80 degrees or more, and 100 degrees or less, the angle (e.g., θ5 of FIG. 8) between the first portion and the second portion may be 180 degrees or less, and the angle (e.g., θ6 of FIG. 8) between the third portion and the second portion may be 180 degrees or less.

According to an embodiment, in a third state in which the user wears the wearable electronic device, an angle between the lens frame and the first portion, an angle between the first portion and the second portion, and an angle between the second portion and the third portion may be changed based on a user's head shape.

According to an embodiment, in the third state, the first portion may be formed to receive a force in the outward direction (e.g., direction ① of FIG. 5) by the user's head.

According to an embodiment, the first leaf spring in the third state may be formed to be rotated by 0 degrees or more to 20 degrees or less in the outward direction (e.g., direction ① of FIG. 5) with respect to the lens frame as compared with the first leaf spring in the second state.

According to an embodiment, in the third state, the second portion and the third portion may be formed to receive a force in the outward direction (e.g., direction ① of FIG. 5) or inward direction (e.g., direction ② of FIG. 5) by the user's head.

## Claims

1. A wearable electronic device (300 of FIG. 5) comprising:
a lens frame (310 of FIG. 5) configured to receive a display member (301 of FIG. 5); and
a temple (320 of FIG. 5) including a first portion (321a of FIG. 5) connected to the lens frame, a second portion (322a of FIG. 5) extending from the first portion, a third portion (323a of FIG. 5) extending from the second portion, and a plurality of hinges, wherein the plurality of hinges (330 of FIG. 5) include:
a first hinge (331a of FIG. 5) positioned between the lens frame and the first portion of the temple and having at least a portion configured to be rotatable in an outward direction (e.g., direction ① of FIG. 5) when a user wears the wearable electronic device;
a second hinge (332a of FIG. 5) positioned between the first portion and the second portion of the temple and having at least a portion configured to be rotatable in the outward direction or an inward direction (e.g., direction ② of FIG. 5) when the user wears the wearable electronic device; and
a third hinge (333a of FIG. 5) positioned between the second portion and the third portion of the temple and having at least a portion configured to be rotatable in the outward direction or the inward direction when the user wears the wearable electronic device.

2. The wearable electronic device of claim 1, wherein in a first state in which the wearable electronic device is folded and a second state in which the wearable electronic device is unfolded, an angle (e.g., θ1 of FIG. 7 or θ4 of FIG. 8) between the first portion and the lens frame is 80 degrees or more, and 100 degrees or less.

3. The wearable electronic device of claim 2, wherein in the first state, an angle (e.g., θ2 of FIG. 7) between the first portion and the second portion is 70 degrees or more, and 110 degrees or less, and
wherein in the second state, the angle (e.g., θ5 of FIG. 8) between the first portion and the second portion is 180 degrees or less.

4. The wearable electronic device of claim 2 or 3, wherein in the first state, an angle (e.g., θ3 of FIG. 7) between the third portion and the second portion is 0 degrees or more, and 30 degrees or less, and
wherein in the second first state, the angle (e.g., θ6 of FIG. 8) between the third portion and the second portion is 180 degrees or less.

5. The wearable electronic device of any one of claims 1 to 4, wherein in a third state in which the user wears the wearable electronic device, an angle between the lens frame and the first portion, an angle between the first portion and the second portion, and an angle between the second portion and the third portion are changed based on a user's head shape.

6. The wearable electronic device of claim 5, wherein in the third state, the first portion is formed to receive a force in the outward direction by the user's head.

7. The wearable electronic device of claim 5 or 6, wherein the first portion in the third state is formed to be rotated by 0 degrees or more to 20 degrees or less in the outward direction (e.g., direction ① of FIG. 5) with respect to the lens frame as compared with the first portion in the second state.

8. The wearable electronic device of any one of claims 5 to 7, wherein in the third state, the second portion is formed to receive a force in the outward direction or the inward direction by the user's head.

9. The wearable electronic device of any one of claims 5 to 8, wherein the second portion in the third state is formed to be rotated by 0 degrees or more to 20 degrees or less in the outward direction, or by 0 degrees or more to 20 degrees or less in the inward direction with respect to the lens frame as compared with the second portion in the second state.

10. The wearable electronic device of any one of claims 5 to 9, wherein in the third state, the third portion is formed to receive a force in the outward direction or the inward direction by the user's head.

11. The wearable electronic device of any one of claims 5 to 10, wherein the third portion in the third state is formed to be rotated by 0 degrees or more to 20 degrees or less in the outward direction, or by 0 degrees or more to 20 degrees or less in the inward direction with respect to the lens frame as compared with the third portion in the second state.

12. The wearable electronic device of any one of claims 1 to 11, wherein the third portion includes a support pad (324 of FIG. 5) configured to at least partially contact the user's head to fix a position of the wearable electronic device.

13. A wearable electronic device (300) comprising:
a lens frame (310 of FIG. 5) configured to receive a display member (301 of FIG. 5); and
a temple (320 of FIG. 5) including a first portion (321a of FIG. 5) connected to the lens frame, a second portion (322a of FIG. 5) extending from the first portion, a third portion (323a of FIG. 5) extending from the second portion, and a plurality of leaf springs (430 of FIG. 11), wherein the plurality of leaf springs include:
a first leaf spring (431a of FIG. 11) positioned between the lens frame and the first portion of the temple and having at least a portion configured to be rotatable in an outward direction (e.g., direction ① of FIG. 5) when a user wears the wearable electronic device;
a second leaf spring (432a of FIG. 11) positioned between the first portion and the second portion of the temple and having at least a portion configured to be rotatable in the outward direction or an inward direction (e.g., direction ② of FIG. 5) when the user wears the wearable electronic device; and
a third leaf spring (433a of FIG. 11) positioned between the second portion and the third portion of the temple and having at least a portion configured to be rotatable in the outward direction or the inward direction when the user wears the wearable electronic device.

14. The wearable electronic device of claim 13, wherein the first leaf spring includes a first bar (4311 of FIG. 12) having at least a portion embedded in an end portion of the lens frame, a second bar (4312 of FIG. 12) having at least a portion embedded in an end portion of the first portion, and a connection portion (4313 of FIG. 12) connecting the first bar and the second bar.

15. The wearable electronic device of claim 13, wherein in a first state in which the wearable electronic device is folded, an angle (e.g., θ1 of FIG. 7 or θ4 of FIG. 8) between the first portion and the lens frame is 80 degrees or more, and 100 degrees or less, an angle (e.g., θ2 of FIG. 7) between the first portion and the second portion is 70 degrees or more, and 110 degrees or less, and an angle (e.g., θ3 of FIG. 7) between the third portion and the second portion is 10 degrees or more and 30 degrees or less.
